# EUROPEAN PATENT APPLICATION

(11) **EP 4 287 546 A1**
(43) Date of publication of application: **06.12.2023**
(21) Application number: 23175067.0
(22) Date of filing: 24.05.2023
(51) Int. Cl.: H04L 5/00, H04W 76/15, H04W 52/36

(54) **DYNAMIC BAND SELECTION IN MULTI-LINK OPERATION WITH TA-SAR INFORMATION IN WIRELESS COMMUNICATIONS**

(30) Priority: 02.06.2022 US 202263348071 P; 14.05.2023 US 202318197087
(71) Applicant: MEDIATEK Inc., Hsinchu City 30078 (TW)
(72) Inventor: YANG, Yen-Wen, 30078 Hsinchu City (TW); TSENG, Ting-Che, 30078 Hsinchu City (TW); LIU, Tzu-Hsuan, 30078 Hsinchu City (TW); CHIU, Wen-Hsien, 30078 Hsinchu City (TW)
(74) Representative: Hoefer & Partner Patentanwälte mbB

(57) **Abstract**

Techniques pertaining to dynamic band selection in multi-link operation, MLO, with time averaged specific absorption rate, TA-SAR, information in wireless communications are described. An apparatus determines a resource allocation regarding one or more multi-link operation, MLO, bands (1010). The apparatus then allocates at least one of a transmit, TX, power, a TX duty cycle and a modulation and coding scheme, MCS, rate in wirelessly transmitting in the one or more MLO bands to result in a TA-SAR that is no greater than a predefined limit (1020).

## Description

### CROSS REFERENCE TO RELATED PATENT APPLICATION

The present disclosure is part of a non-provisional patent application claiming the priority benefit of U.S. Provisional Patent Application No. 63/348,071, filed 2 June 2022, the content of which herein being incorporated by reference in its entirety.

### TECHNICAL FIELD

The present disclosure is generally related to wireless communications and, more particularly, to dynamic band selection in multi-link operation (MLO) with time averaged specific absorption rate (TA-SAR) information in wireless communications.

### BACKGROUND

Unless otherwise indicated herein, approaches described in this section are not prior art to the claims listed below and are not admitted as prior art by inclusion in this section.

In wireless communications in accordance with one or more Institute of Electrical and Electronics Engineers (IEEE) standards, such as Wi-Fi (or WiFi) and wireless local area networks (WLANs), MLO techniques are utilized (e.g., in WiFi7) to enable link aggregation across different bands and channels with considerably lower latency. The parameter of TA-SAR is a time averaged measure of the rate at white energy is absorbed per unit mass by a human body when exposed to a radio frequency (RF) electromagnetic field (e.g., due to transmissions in WiFi communications). How to appropriately control transmit power and traffic in a WiFi7 MLO band based on TA-SAR information so as to optimize throughput, transmission range and TA-SAR remains an open issue. Therefore, there is a need for a solution of dynamic band selection in MLO with TA-SAR information in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to dynamic band selection in MLO with TA-SAR information in wireless communications. Thus, it is believed that various schemes proposed herein may address or otherwise alleviate aforementioned issue(s), such as reduction in performance overhead. A method and an apparatus according to the invention are defined in the independent claims. The dependent claims define preferred embodiments thereof.

In one aspect, a method may involve determining a resource allocation regarding one or more MLO bands. The method may also involve allocating at least one of a transmit (TX) power, a TX duty cycle and a modulation and coding scheme (MCS) rate in wirelessly transmitting in the one or more MLO bands to result in a TA-SAR that is no greater than a predefined limit.

In another aspect, an apparatus implementable in a first MLD may include a transceiver configured to communicate wirelessly and a processor coupled to the transceiver. The processor may determine a resource allocation regarding one or more MLO bands. The processor may also allocate at least one of a TX power, a TX duty cycle and an MCS rate in wirelessly transmitting in the one or more MLO bands to result in a TA-SAR that is no greater than a predefined limit.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario in which various proposed solutions and schemes in accordance with the present disclosure may be implemented.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a diagram of an example scenario under a proposed scheme in accordance with the present disclosure.
FIG. 8 is a diagram of an example scenario under a proposed scheme in accordance with the present disclosure.
FIG. 9 is a block diagram of an example communication system in accordance with an implementation of the present disclosure.
FIG. 10 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to dynamic band selection in MLO with TA-SAR information in wireless communications. According to the present disclosure, a number of possible solutions may be implemented separately or jointly. That is, although these possible solutions may be described below separately, two or more of these possible solutions may be implemented in one combination or another.

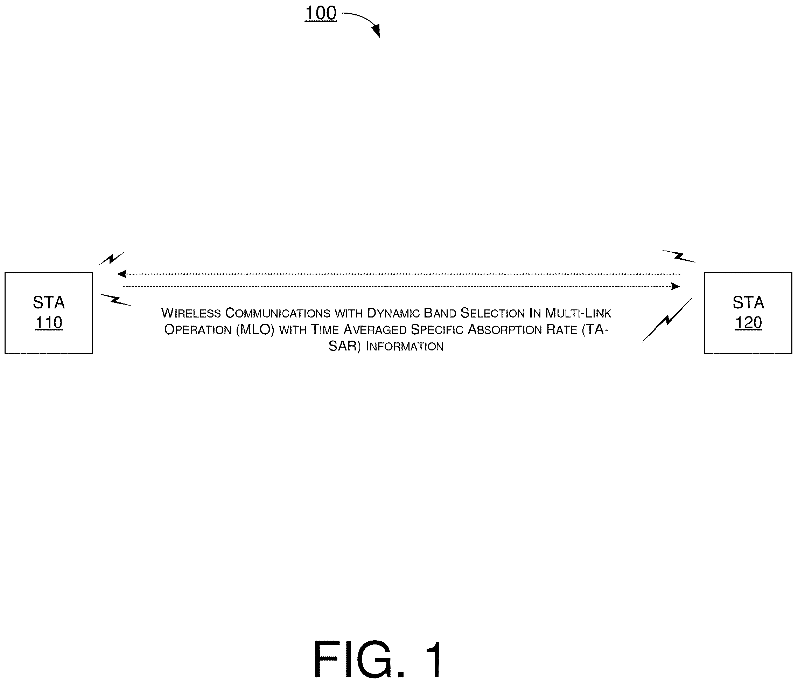

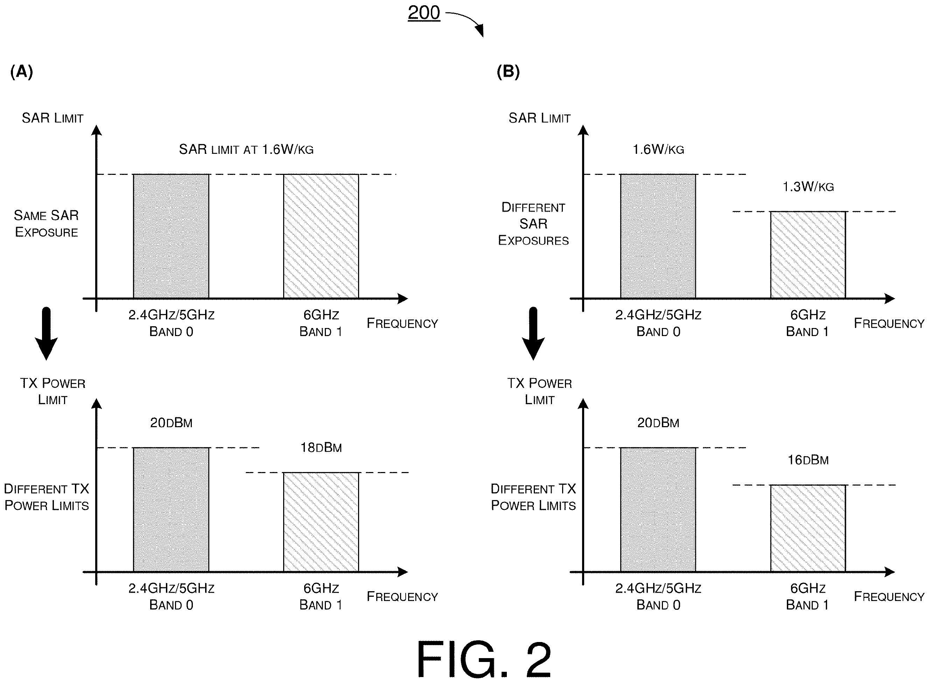

FIG. 1 illustrates an example network environment 100 in which various solutions and schemes in accordance with the present disclosure may be implemented. FIG. 2 ~ FIG. 10 illustrate examples of implementation of various proposed schemes in network environment 100 in accordance with the present disclosure. The following description of various proposed schemes is provided with reference to FIG. 1 ~ FIG. 10.

Referring to FIG. 1, network environment 100 may involve at least a STA 110 communicating wirelessly with a STA 120. Either of STA 110 and STA 120 may be a non-access point (non-AP) STA or, alternatively, either of STA 110 and STA 120 may function as an access point (AP) STA. In some cases, STA 110 and STA 120 may be associated with a basic service set (BSS) in accordance with one or more IEEE 802.11 standards (e.g., IEEE 802.11 be and future-developed standards). Each of STA 110 and STA 120 may be configured to communicate with each other by utilizing the techniques pertaining to dynamic band selection in MLO with TA-SAR information in wireless communications in accordance with various proposed schemes described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

Under various proposed schemes in accordance with the present disclosure, a STA (e.g., STA 110) may measure a transmit (TX) power limit of each band (e.g., 2.4GHz, 5GHz and/or 6GHz) which is mapped to or corresponds to a specific absorption rate (SAR) limit. The STA may also collect or otherwise receive one or more messages from one or more other STAs (e.g., STA 120) to determine WiFi MLO band resource allocation. The messages may include or otherwise indicate information such as, for example and without limitation, a TA-SAR power limit, a TX target power, a TX modulation and coding scheme (MCS) rate, one or more TX performance indices (TX PER), one or more receive (RX) performance indices (e.g., a received signal strength index (RSSI), a RX performance index (RX PER), and/or a signal-to-noise ratio (SNR)). Then, the STA may dynamically determine and allocate TX power and TX duty cycle to WiFi MLO band(s) in order to meet TA-SAR requirement for respective band(s).

For instance, for downlink single-user (DL-SU), downlink multi-user (DL-MU) and/or uplink trigger-based (UL-TB) transmissions, an AP STA may arrange a TX traffic for MLO bands under one or more of the proposed schemes. For instance, the AP STA may arrange a low MCS traffic and control a high TX power at a high TX power limit band to enhance transmission range. Alternatively, or additionally, the AP STA may arrange a high MCS traffic and control a low TX power at a low TX power limit band to enhance throughput. Alternatively, or additionally, the AP STA may arrange the low MCS traffic and control a TX duty cycle at the high TX power limit band to enhance transmission range. Alternatively, or additionally, the AP STA may arrange the high MCS traffic and control the TX duty cycle at the low TX power limit band to enhance throughput. Alternatively, or additionally, the AP STA may arrange the low MCS traffic and control the TX power and the TX duty cycle at the high TX power limit band to enhance transmission range. Alternatively, or additionally, the AP STA may arrange the high MCS traffic and control the TX power and the TX duty cycle at the low TX power limit band to enhance throughput.

Similarly, for uplink single-user (UL-SU) transmissions, an AP STA may arrange a TX traffic for MLO bands under one or more of the proposed schemes. For instance, the AP STA may arrange a low MCS traffic and control a high TX power at a high TX power limit band to enhance transmission range. Alternatively, or additionally, the AP STA may arrange a high MCS traffic and control a low TX power at a low TX power limit band to enhance throughput. Alternatively, or additionally, the AP STA may arrange the low MCS traffic and control a TX duty cycle at the high TX power limit band to enhance transmission range. Alternatively, or additionally, the AP STA may arrange the high MCS traffic and control the TX duty cycle at the low TX power limit band to enhance throughput. Alternatively, or additionally, the AP STA may arrange the low MCS traffic and control the TX power and the TX duty cycle at the high TX power limit band to enhance transmission range. Alternatively, or additionally, the AP STA may arrange the high MCS traffic and control the TX power and the TX duty cycle at the low TX power limit band to enhance throughput.

Moreover, for DL-SU, DL-MU and/or UL-TB transmissions, an AP STA may arrange a TX traffic for MLO bands under one or more of the proposed schemes. For instance, the AP STA may arrange a low MCS traffic and control a high TX power at a high TA-SAR limit band to enhance transmission range. Alternatively, or additionally, the AP STA may arrange a high MCS traffic and control a low TX power at a low TA-SAR limit band to enhance throughput. Alternatively, or additionally, the AP STA may arrange the low MCS traffic and control a TX duty cycle at the high TA-SAR limit band to enhance transmission range. Alternatively, or additionally, the AP STA may arrange the high MCS traffic and control the TX duty cycle at the low TA-SAR limit band to enhance throughput. Alternatively, or additionally, the AP STA may arrange the low MCS traffic and control the TX power and the TX duty cycle at the high TA-SAR limit band to enhance transmission range. Alternatively, or additionally, the AP STA may arrange the high MCS traffic and control the TX power and the TX duty cycle at the low TA-SAR limit band to enhance throughput.

Likewise, for UL-SU transmissions, an AP STA may arrange a TX traffic for MLO bands under one or more of the proposed schemes. For instance, the AP STA may arrange a low MCS traffic and control a high TX power at a high TA-SAR limit band to enhance transmission range. Alternatively, or additionally, the AP STA may arrange a high MCS traffic and control a low TX power at a low TA-SAR limit band to enhance throughput. Alternatively, or additionally, the AP STA may arrange the low MCS traffic and control a TX duty cycle at the high TA-SAR limit band to enhance transmission range. Alternatively, or additionally, the AP STA may arrange the high MCS traffic and control the TX duty cycle at the low TA-SAR limit band to enhance throughput. Alternatively, or additionally, the AP STA may arrange the low MCS traffic and control the TX power and the TX duty cycle at the high TA-SAR limit band to enhance transmission range. Alternatively, or additionally, the AP STA may arrange the high MCS traffic and control the TX power and the TX duty cycle at the low TA-SAR limit band to enhance throughput.

FIG. 2 illustrates an example scenario 200 in which various proposed solutions and schemes in accordance with the present disclosure may be implemented. In particular, part (A) of FIG. 2 shows a first scenario (Scenario 1) and part (B) of FIG. 2 shows a second scenario (Scenario 2) in which various schemes proposed herein may be implemented. In Scenario 1, the condition may be that WiFi has the same TA-SAR limit but different TX power limits at different MLO bands. For instance, the 2.4GHz/5GHz band (e.g., band 0) and the 6GHz band (e.g., band 1) may have the same TA-SAR limit of 1.6 Watt (W) per kilogram (kg) but different TX power limits (e.g., 20dBm for the 2.4GHz/5GHz band and 18dBm for the 6GHz band). In Scenario 2, the condition may be that WiFi has different TA-SAR limits at different MLO bands. For instance, the 2.4GHz/5GHz band and the 6GHz band may have different TA-SAR limits (e.g., 1.6W/kg for the 2.4GHz/5GHz band and 1.3W/kg for the 6GHz band) as well as different TX power limits (e.g., 20dBm for the 2.4GHz/5GHz band and 18dBm for the 6GHz band).

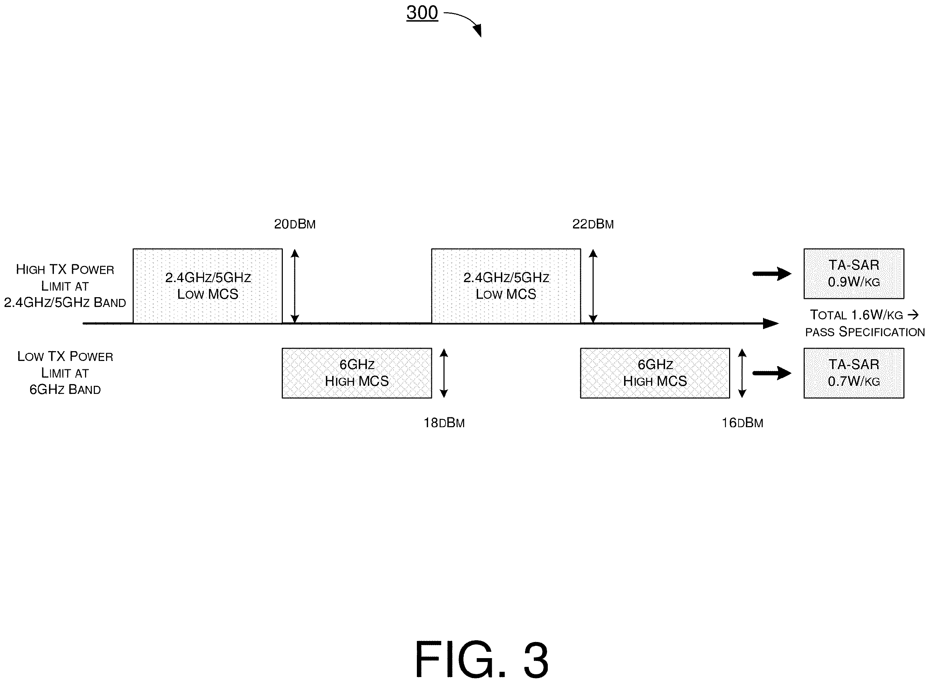

FIG. 3 illustrates an example scenario 300 under a proposed scheme in accordance with the present disclosure. Scenario 300 is a first example (Scenario 1-1) under the condition of Scenario 1. Under the proposed scheme, an aim or target to achieve in scenario 300 is to enhance transmission range and throughput to meet TA-SAR requirement. Referring to FIG. 3, the proposed scheme may involve arranging a low MCS traffic and controlling a high TX power at a high TX power limit band (e.g., 2.4GHz or 5GHz band) to enhance transmission range. Moreover, the proposed scheme may involve arranging a high MCS traffic and controlling a low TX power at a low TX power limit band (e.g., 6GHz band) to enhance throughput. For instance, as shown in FIG. 3, a low MCS traffic in the 2.4GHz/5GHz band may be transmitted with its high TX power controlled and limited at 20dBm/22dBm, thereby reducing the TA-SAR to 0.9W/kg while enhancing transmission range. Moreover, a high MCS traffic in the 6GHz band may be transmitted with its low TX power controlled and limited at 18dBm/16dBm, thereby reducing the TA-SAR to 0.7W/kg while enhancing throughput. The total resultant TA-SAR is 1.6W/kg (= 0.9W/kg + 0.7W/kg) which meets or otherwise passes (e.g., is no greater than) a predefined limit of 1.6W/kg according to the TA-SAR regulation.

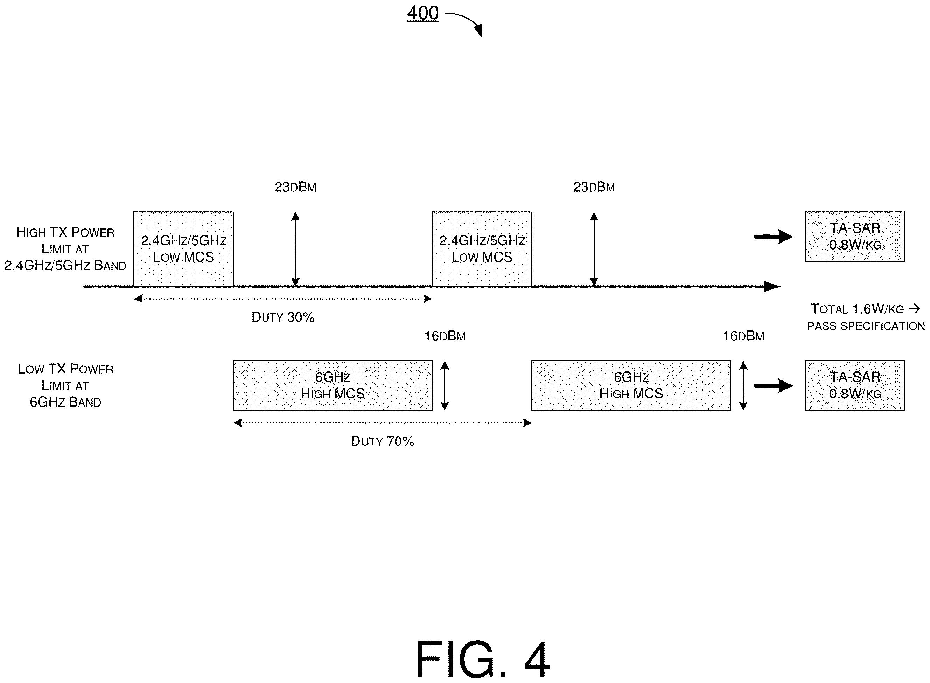

FIG. 4 illustrates an example scenario 400 under a proposed scheme in accordance with the present disclosure. Scenario 400 is a second example (Scenario 1-2) under the condition of Scenario 1. Under the proposed scheme, an aim or target to achieve in scenario 400 is to enhance transmission range and throughput to meet TA-SAR requirement. Referring to FIG. 4, the proposed scheme may involve arranging a low MCS traffic and controlling a TX duty cycle at a high TX power limit band (e.g., 2.4GHz or 5GHz band) to enhance transmission range. Moreover, the proposed scheme may involve arranging a high MCS traffic and controlling the TX duty cycle at a low TX power limit band (e.g., 6GHz band) to enhance throughput. For instance, as shown in FIG. 4, a low MCS traffic in the 2.4GHz/5GHz band may be transmitted with the duty cycle of its high TX power controlled and limited at 30% duty, thereby reducing the TA-SAR to 0.8W/kg while enhancing transmission range. Moreover, a high MCS traffic in the 6GHz band may be transmitted with the duty cycle of its low TX power controlled and limited at 70% duty, thereby reducing the TA-SAR to 0.8W/kg while enhancing throughput. The total resultant TA-SAR is 1.6W/kg (= 0.8W/kg + 0.8W/kg) which meets or otherwise passes (e.g., is no greater than) the predefined limit of 1.6W/kg according to the TA-SAR regulation.

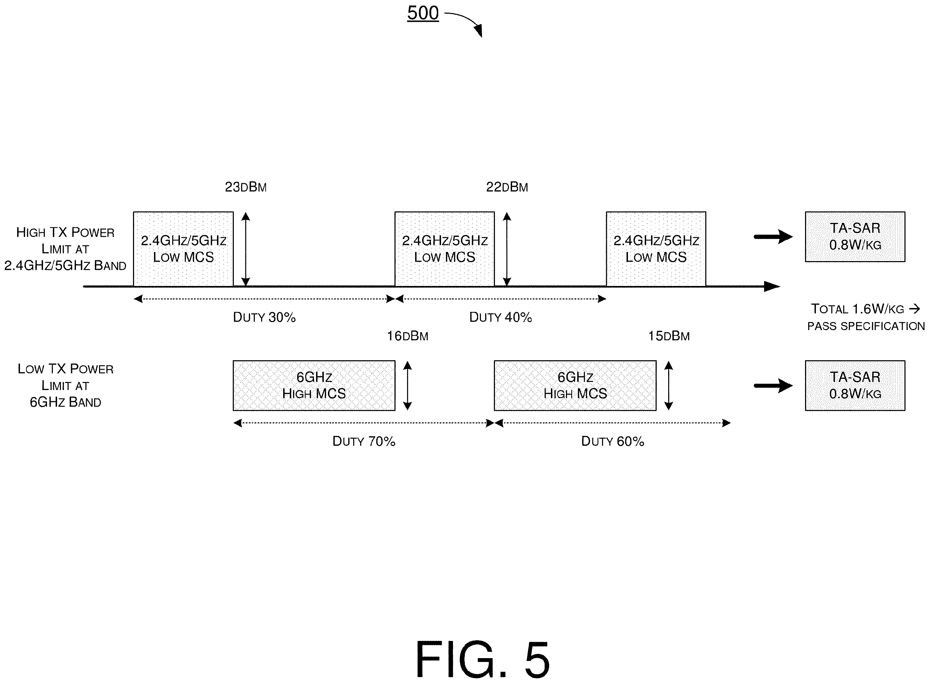

FIG. 5 illustrates an example scenario 500 under a proposed scheme in accordance with the present disclosure. Scenario 500 is a third example (Scenario 1-3) under the condition of Scenario 1. Under the proposed scheme, an aim or target to achieve in scenario 500 is to enhance transmission range and throughput to meet TA-SAR requirement. Referring to FIG. 5, the proposed scheme may involve arranging a low MCS traffic and controlling a TX power and a TX duty cycle at a high TX power limit band (e.g., 2.4GHz or 5GHz band) to enhance transmission range. Moreover, the proposed scheme may involve arranging a high MCS traffic and controlling the TX power and the TX duty cycle at a low TX power limit band (e.g., 6GHz band) to enhance throughput. For instance, as shown in FIG. 5, a low MCS traffic in the 2.4GHz/5GHz band may be transmitted with its high TX power and the duty cycle thereof controlled and limited at 23dBm/22dBm and 30% duty/40% duty, respectively, thereby reducing the TA-SAR to 0.8W/kg while enhancing transmission range. Moreover, a high MCS traffic in the 6GHz band may be transmitted with its low TX power the duty cycle thereof controlled and limited at 16dBm/15dBm and 70% duty/60% duty, respectively, thereby reducing the TA-SAR to 0.8W/kg while enhancing throughput. The total resultant TA-SAR is 1.6W/kg (= 0.8W/kg + 0.8W/kg) which meets or otherwise passes (e.g., is no greater than) the predefined limit of 1.6W/kg according to the TA-SAR regulation.

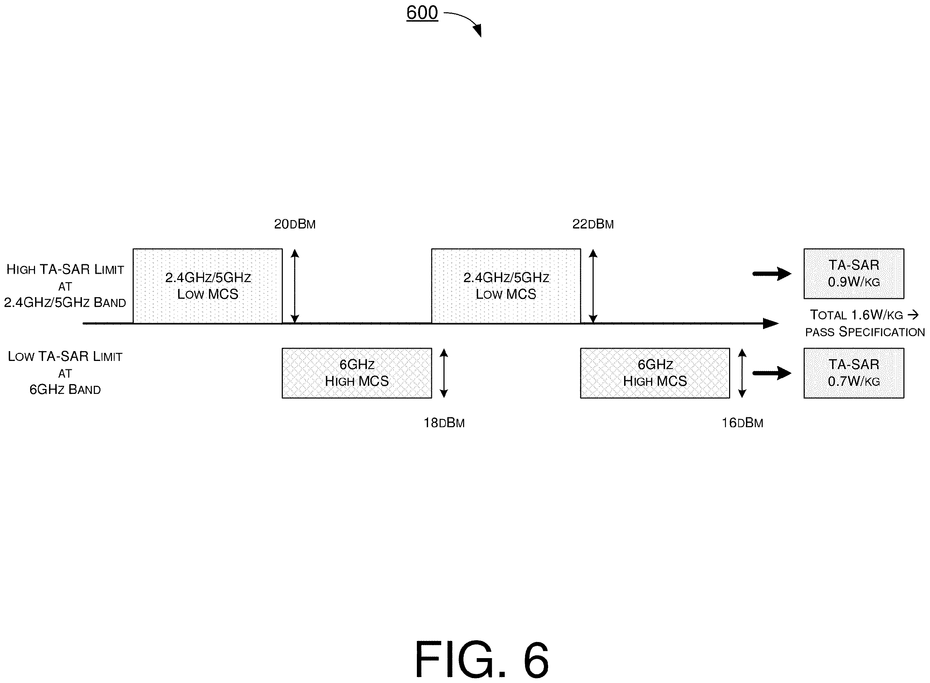

FIG. 6 illustrates an example scenario 600 under a proposed scheme in accordance with the present disclosure. Scenario 600 is a first example (Scenario 2-1) under the condition of Scenario 2. Under the proposed scheme, an aim or target to achieve in scenario 600 is to enhance transmission range and throughput to meet TA-SAR requirement. Referring to FIG. 6, the proposed scheme may involve arranging a low MCS traffic and controlling a high TX power at a high TA-SAR limit band (e.g., 2.4GHz or 5GHz band) to enhance transmission range. Moreover, the proposed scheme may involve arranging a high MCS traffic and controlling a low TX power at a low TA-SAR limit band (e.g., 6GHz band) to enhance throughput. For instance, as shown in FIG. 6, a low MCS traffic in the 2.4GHz/5GHz band may be transmitted with its high TX power controlled and limited at 20dBm/22dBm, thereby reducing the TA-SAR to 0.9W/kg while enhancing transmission range. Moreover, a high MCS traffic in the 6GHz band may be transmitted with its low TX power controlled and limited at 18dBm/16dBm, thereby reducing the TA-SAR to 0.7W/kg while enhancing throughput. The total resultant TA-SAR is 1.6W/kg (= 0.9W/kg + 0.7W/kg) which meets or otherwise passes (e.g., is no greater than) the predefined limit of 1.6W/kg according to the TA-SAR regulation.

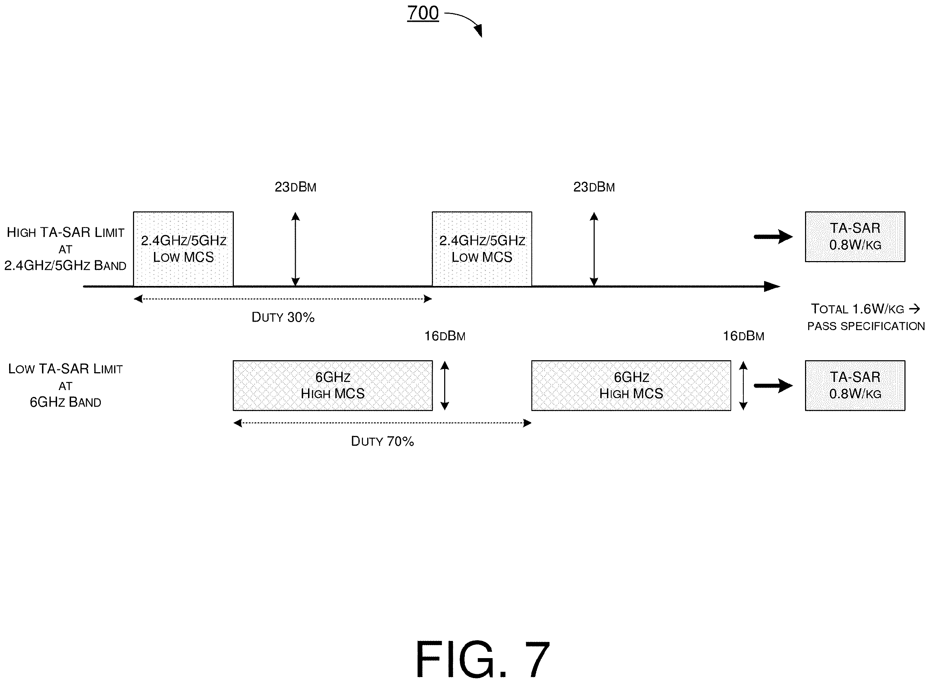

FIG. 7 illustrates an example scenario 700 under a proposed scheme in accordance with the present disclosure. Scenario 700 is a second example (Scenario 2-2) under the condition of Scenario 2. Under the proposed scheme, an aim or target to achieve in scenario 700 is to enhance transmission range and throughput to meet TA-SAR requirement. Referring to FIG. 7, the proposed scheme may involve arranging a low MCS traffic and controlling a TX duty cycle at a high TA-SAR limit band (e.g., 2.4GHz or 5GHz band) to enhance transmission range. Moreover, the proposed scheme may involve arranging a high MCS traffic and controlling the TX duty cycle at a low TA-SAR limit band (e.g., 6GHz band) to enhance throughput. For instance, as shown in FIG. 7, a low MCS traffic in the 2.4GHz/5GHz band may be transmitted with the duty cycle of its high TX power controlled and limited at 30% duty, thereby reducing the TA-SAR to 0.8W/kg while enhancing transmission range. Moreover, a high MCS traffic in the 6GHz band may be transmitted with the duty cycle of its low TX power controlled and limited at 70% duty, thereby reducing the TA-SAR to 0.8W/kg while enhancing throughput. The total resultant TA-SAR is 1.6W/kg (= 0.8W/kg + 0.8W/kg) which meets or otherwise passes (e.g., is no greater than) the predefined limit of 1.6W/kg according to the TA-SAR regulation.

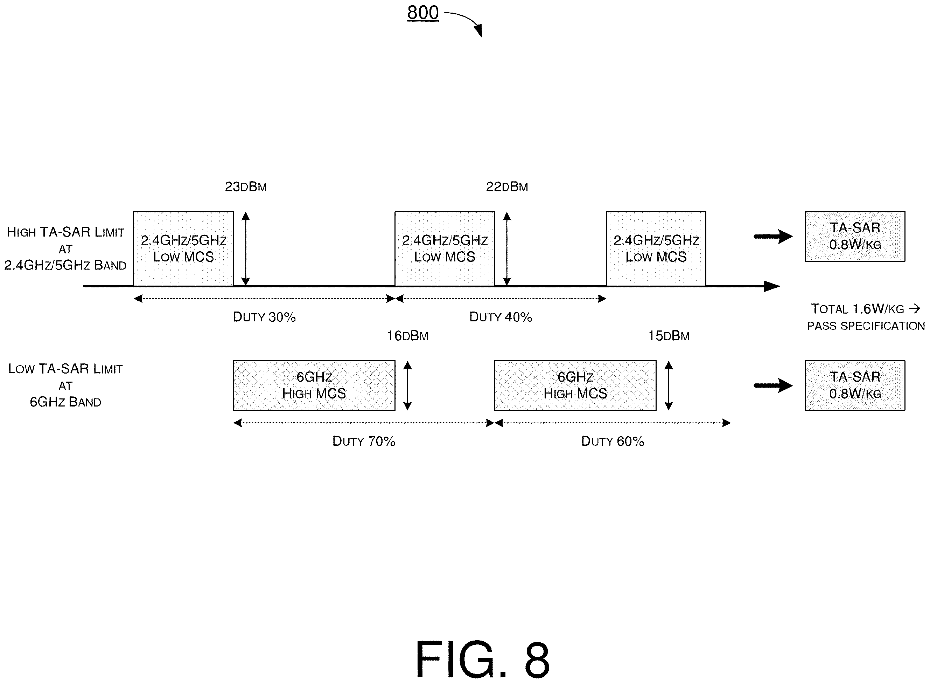

FIG. 8 illustrates an example scenario 800 under a proposed scheme in accordance with the present disclosure. Scenario 800 is a third example (Scenario 2-3) under the condition of Scenario 2. Under the proposed scheme, an aim or target to achieve in scenario 800 is to enhance transmission range and throughput to meet TA-SAR requirement. Referring to FIG. 8, the proposed scheme may involve arranging a low MCS traffic and controlling a TX power and a TX duty cycle at a high TA-SAR limit band (e.g., 2.4GHz or 5GHz band) to enhance transmission range. Moreover, the proposed scheme may involve arranging a high MCS traffic and controlling the TX power and the TX duty cycle at a low TA-SAR limit band (e.g., 6GHz band) to enhance throughput. For instance, as shown in FIG. 8, a low MCS traffic in the 2.4GHz/5GHz band may be transmitted with its high TX power and the duty cycle thereof controlled and limited at 23dBm/22dBm and 30% duty/40% duty, respectively, thereby reducing the TA-SAR to 0.8W/kg while enhancing transmission range. Moreover, a high MCS traffic in the 6GHz band may be transmitted with its low TX power the duty cycle thereof controlled and limited at 16dBm/15dBm and 70% duty/60% duty, respectively, thereby reducing the TA-SAR to 0.8W/kg while enhancing throughput. The total resultant TA-SAR is 1.6W/kg (= 0.8W/kg + 0.8W/kg) which meets or otherwise passes (e.g., is no greater than) the predefined limit of 1.6W/kg according to the TA-SAR regulation.

In view of the above, under various proposed schemes in accordance with the present disclosure, WiFi TX power, duty cycle and MCS rate may be allocated differently for MLO band selection based on TA-SAR measurement for AP DL transmissions and STA UL transmissions. Advantageously, it is believed that, compared to existing/conventional allocation approaches, implementations of one or more of the proposed schemes may improve performance in terms of transmission range, throughput and lower TA-SAR. This is because conventional approaches do not arrange the TX traffic based on TA-SAR TX power limit condition. Moreover, conventional approaches do not arrange the TX traffic based on TA-SAR limit or power limit condition, and thus conventional approaches do not optimize performance or meet TA-SAR regulation. In contrast, the proposed schemes in accordance with the present disclosure may arrange the TX traffic based on TA-SAR limit and/or TX power limit, thereby optimizing performance while meeting TA-SAR requirement/regulation.

### Illustrative Implementations

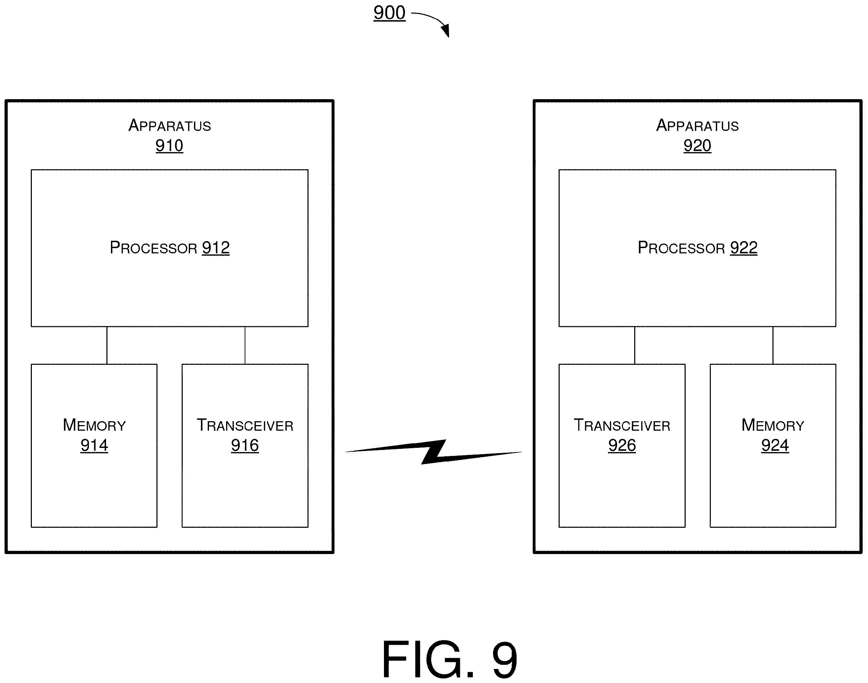

FIG. 9 illustrates an example system 900 having at least an example apparatus 910 and an example apparatus 920 in accordance with an implementation of the present disclosure. Each of apparatus 910 and apparatus 920 may perform various functions to implement schemes, techniques, processes and methods described herein pertaining to dynamic band selection in MLO with TA-SAR information in wireless communications, including the various schemes described above with respect to various proposed designs, concepts, schemes, systems and methods described above as well as processes described below. For instance, apparatus 910 may be implemented in STA 110 and apparatus 920 may be implemented in STA 120, or vice versa.

Each of apparatus 910 and apparatus 920 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 910 and apparatus 920 may be implemented in a smartphone, a smart watch, a personal digital assistant, a digital camera, or a computing equipment such as a tablet computer, a laptop computer or a notebook computer. Each of apparatus 910 and apparatus 920 may also be a part of a machine type apparatus, which may be an IoT apparatus such as an immobile or a stationary apparatus, a home apparatus, a wire communication apparatus or a computing apparatus. For instance, each of apparatus 910 and apparatus 920 may be implemented in a smart thermostat, a smart fridge, a smart door lock, a wireless speaker or a home control center. When implemented in or as a network apparatus, apparatus 910 and/or apparatus 920 may be implemented in a network node, such as an AP in a WLAN.

In some implementations, each of apparatus 910 and apparatus 920 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 910 and apparatus 920 may be implemented in or as a STA or an AP. Each of apparatus 910 and apparatus 920 may include at least some of those components shown in FIG. 9 such as a processor 912 and a processor 922, respectively, for example. Each of apparatus 910 and apparatus 920 may further include one or more other components not pertinent to the proposed scheme of the present disclosure (e.g., internal power supply, display device and/or user interface device), and, thus, such component(s) of apparatus 910 and apparatus 920 are neither shown in FIG. 9 nor described below in the interest of simplicity and brevity.

In one aspect, each of processor 912 and processor 922 may be implemented in the form of one or more single-core processors, one or more multi-core processors, one or more RISC processors or one or more CISC processors. That is, even though a singular term "a processor" is used herein to refer to processor 912 and processor 922, each of processor 912 and processor 922 may include multiple processors in some implementations and a single processor in other implementations in accordance with the present disclosure. In another aspect, each of processor 912 and processor 922 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 912 and processor 922 is a special-purpose machine specifically designed, arranged and configured to perform specific tasks including those pertaining to dynamic band selection in MLO with TA-SAR information in wireless communications in accordance with various implementations of the present disclosure.

In some implementations, apparatus 910 may also include a transceiver 916 coupled to processor 912. Transceiver 916 may include a transmitter capable of wirelessly transmitting and a receiver capable of wirelessly receiving data. In some implementations, apparatus 920 may also include a transceiver 926 coupled to processor 922. Transceiver 926 may include a transmitter capable of wirelessly transmitting and a receiver capable of wirelessly receiving data. It is noteworthy that, although transceiver 916 and transceiver 926 are illustrated as being external to and separate from processor 912 and processor 922, respectively, in some implementations, transceiver 916 may be an integral part of processor 912 as a system on chip (SoC) and/or transceiver 926 may be an integral part of processor 922 as a SoC.

In some implementations, apparatus 910 may further include a memory 914 coupled to processor 912 and capable of being accessed by processor 912 and storing data therein. In some implementations, apparatus 920 may further include a memory 924 coupled to processor 922 and capable of being accessed by processor 922 and storing data therein. Each of memory 914 and memory 924 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 914 and memory 924 may include a type of read-only memory (ROM) such as mask ROM, programmable ROM (PROM), erasable programmable ROM (EPROM) and/or electrically erasable programmable ROM (EEPROM). Alternatively, or additionally, each of memory 914 and memory 924 may include a type of non-volatile random-access memory (NVRAM) such as flash memory, solid-state memory, ferroelectric RAM (FeRAM), magnetoresistive RAM (MRAM) and/or phase-change memory.

Each of apparatus 910 and apparatus 920 may be a communication entity capable of communicating with each other using various proposed schemes in accordance with the present disclosure. For illustrative purposes and without limitation, a description of capabilities of apparatus 910, as STA 110, and apparatus 920, as STA 120, is provided below. It is noteworthy that, although a detailed description of capabilities, functionalities and/or technical features of apparatus 920 is provided below, the same may be applied to apparatus 910 although a detailed description thereof is not provided solely in the interest of brevity. It is also noteworthy that, although the example implementations described below are provided in the context of WLAN, the same may be implemented in other types of networks.

Under various proposed schemes pertaining to dynamic band selection in MLO with TA-SAR information in wireless communications in accordance with the present disclosure, with apparatus 910 implemented in or as STA 110 and apparatus 920 implemented in or as STA 120 in network environment 100, processor 912 of apparatus 910 may determine a resource allocation regarding or more MLO bands. Moreover, processor 912 may allocate at least one of a TX power, a TX duty cycle and an MCS rate in wirelessly transmitting in the one or more MLO bands to result in a TA-SAR that is no greater than a predefined limit.

In some implementations, prior to the determining, processor 912 may additionally perform certain operations. For instance, processor 912 may measure a TX power limit of each of the one or more MLO bands which is mapped to a respective SAR limit. Moreover, processor 912 may receive one or more messages from one or more STAs (e.g., apparatus 920). In such cases, in determining, processor 912 may determine based on a result of the measuring and the one or more messages. In some implementation, the one or more messages indicate information may include at least one of a TA-SAR power limit, a TX target power, a TX MCS rate, one or more TX performance indices, one or more RX performance indices including one or more of a RSSI, a RX performance index and an SNR.

In some implementations, in allocating, processor 912 may allocate at least one of the TX power, the TX duty cycle and the MCS rate based on a TA-SAR measurement regarding a DL transmission or an UL transmission.

In some implementations, prior to the determining, processor 912 may also arrange one or more TX traffics with respect to at least one of a DL-SU transmission, a DL-MU transmission and an UL-TB transmission. In some implementations, in arranging, processor 912 may perform one or more of the following: (1) arranging a low MCS traffic and controlling a high TX power at a high TX power limit band to enhance a transmission range; (2) arranging a high MCS traffic and controlling a low TX power at a low TX power limit band to enhance a throughput; (3) arranging the low MCS traffic and controlling a TX duty cycle at the high TX power limit band to enhance the transmission range; (4) arranging the high MCS traffic and controlling the TX duty cycle at the low TX power limit band to enhance the throughput; (5) arranging the low MCS traffic and controlling the TX power and the TX duty cycle at the high TX power limit band to enhance the transmission range; and (6) arranging the high MCS traffic and controlling the TX power and the TX duty cycle at the low TX power limit band to enhance the throughput. Alternatively, in arranging, processor 912 may perform one or more of the following: (1) arranging a low MCS traffic and controlling a high TX power at a high TA-SAR limit band to enhance a transmission range; (2) arranging a high MCS traffic and controlling a low TX power at a low TA-SAR limit band to enhance a throughput; (3) arranging the low MCS traffic and controlling a TX duty cycle at the high TA-SAR limit band to enhance the transmission range; (4) arranging the high MCS traffic and controlling the TX duty cycle at the low TA-SAR limit band to enhance the throughput; (5) arranging the low MCS traffic and controlling the TX power and the TX duty cycle at the high TA-SAR limit band to enhance the transmission range; and (6) arranging the high MCS traffic and controlling the TX power and the TX duty cycle at the low TA-SAR limit band to enhance the throughput.

In some implementations, prior to the determining, processor 912 may also arrange one or more TX traffics with respect to an UL-SU transmission. In some implementations, in arranging, processor 912 may perform one or more of the following: (1) arranging a low MCS traffic and controlling a high TX power at a high TX power limit band to enhance a transmission range; (2) arranging a high MCS traffic and controlling a low TX power at a low TX power limit band to enhance a throughput; (3) arranging the low MCS traffic and controlling a TX duty cycle at the high TX power limit band to enhance the transmission range; (4) arranging the high MCS traffic and controlling the TX duty cycle at the low TX power limit band to enhance the throughput; (5) arranging the low MCS traffic and controlling the TX power and the TX duty cycle at the high TX power limit band to enhance the transmission range; and (6) arranging the high MCS traffic and controlling the TX power and the TX duty cycle at the low TX power limit band to enhance the throughput. Alternatively, in arranging, processor 912 may perform one or more of the following: (1) arranging a low MCS traffic and controlling a high TX power at a high TA-SAR limit band to enhance a transmission range; (2) arranging a high MCS traffic and controlling a low TX power at a low TA-SAR limit band to enhance a throughput; (3) arranging the low MCS traffic and controlling a TX duty cycle at the high TA-SAR limit band to enhance the transmission range; (4) arranging the high MCS traffic and controlling the TX duty cycle at the low TA-SAR limit band to enhance the throughput; (5) arranging the low MCS traffic and controlling the TX power and the TX duty cycle at the high TA-SAR limit band to enhance the transmission range; and (6) arranging the high MCS traffic and controlling the TX power and the TX duty cycle at the low TA-SAR limit band to enhance the throughput.

### Illustrative Processes

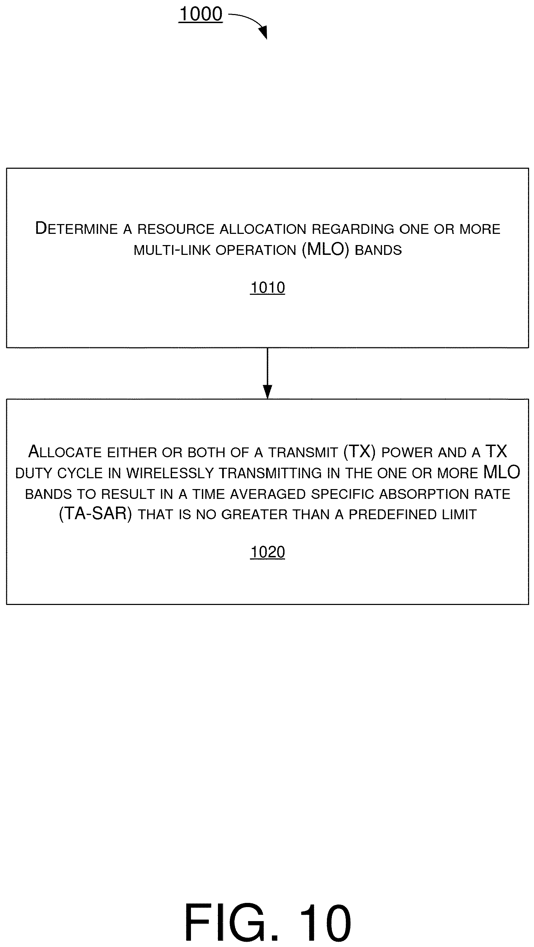

FIG. 10 illustrates an example process 1000 in accordance with an implementation of the present disclosure. Process 1000 may represent an aspect of implementing various proposed designs, concepts, schemes, systems and methods described above. More specifically, process 1000 may represent an aspect of the proposed concepts and schemes pertaining to dynamic band selection in MLO with TA-SAR information in wireless communications in accordance with the present disclosure. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively in a different order. Furthermore, one or more of the blocks/sub-blocks of process 1000 may be executed repeatedly or iteratively. Process 1000 may be implemented by or in apparatus 910 and apparatus 920 as well as any variations thereof. Solely for illustrative purposes and without limiting the scope, process 1000 is described below in the context of apparatus 910 implemented in or as STA 110 functioning as a non-AP STA (or an AP STA) and apparatus 920 implemented in or as STA 120 functioning as an AP STA (or a non-AP STA) of a wireless network such as a WLAN in network environment 100 in accordance with one or more of IEEE 902.11 standards. Process 1000 may begin at block 1010.

At 1010, process 1000 may involve processor 912 of apparatus 910 determining a resource allocation regarding or more MLO bands. Process 1000 may proceed from 1010 to 1020.

At 1020, process 1000 may involve processor 912 allocating at least one of a TX power, a TX duty cycle and an MCS rate in wirelessly transmitting in the one or more MLO bands to result in a TA-SAR that is no greater than a predefined limit.

In some implementations, prior to the determining, process 1000 may additionally involve processor 912 performing certain operations. For instance, process 1000 may involve processor 912 measuring a TX power limit of each of the one or more MLO bands which is mapped to a respective SAR limit. Moreover, process 1000 may involve processor 912 receiving one or more messages from one or more STAs (e.g., apparatus 920). In such cases, in determining, process 1000 may involve processor 912 determining based on a result of the measuring and the one or more messages. In some implementation, the one or more messages indicate information may include at least one of a TA-SAR power limit, a TX target power, a TX MCS rate, one or more TX performance indices, one or more RX performance indices including one or more of a RSSI, a RX performance index and an SNR.

In some implementations, in allocating, process 1000 may involve processor 912 allocating at least one of the TX power, the TX duty cycle and the MCS rate based on a TA-SAR measurement regarding a DL transmission or an UL transmission.

In some implementations, prior to the determining, process 1000 may additionally involve processor 912 arranging one or more TX traffics with respect to at least one of a DL-SU transmission, a DL-MU transmission and an UL-TB transmission. In some implementations, in arranging, process 1000 may involve processor 912 performing one or more of the following: (1) arranging a low MCS traffic and controlling a high TX power at a high TX power limit band to enhance a transmission range; (2) arranging a high MCS traffic and controlling a low TX power at a low TX power limit band to enhance a throughput; (3) arranging the low MCS traffic and controlling a TX duty cycle at the high TX power limit band to enhance the transmission range; (4) arranging the high MCS traffic and controlling the TX duty cycle at the low TX power limit band to enhance the throughput; (5) arranging the low MCS traffic and controlling the TX power and the TX duty cycle at the high TX power limit band to enhance the transmission range; and (6) arranging the high MCS traffic and controlling the TX power and the TX duty cycle at the low TX power limit band to enhance the throughput. Alternatively, in arranging, process 1000 may involve processor 912 performing one or more of the following: (1) arranging a low MCS traffic and controlling a high TX power at a high TA-SAR limit band to enhance a transmission range; (2) arranging a high MCS traffic and controlling a low TX power at a low TA-SAR limit band to enhance a throughput; (3) arranging the low MCS traffic and controlling a TX duty cycle at the high TA-SAR limit band to enhance the transmission range; (4) arranging the high MCS traffic and controlling the TX duty cycle at the low TA-SAR limit band to enhance the throughput; (5) arranging the low MCS traffic and controlling the TX power and the TX duty cycle at the high TA-SAR limit band to enhance the transmission range; and (6) arranging the high MCS traffic and controlling the TX power and the TX duty cycle at the low TA-SAR limit band to enhance the throughput.

In some implementations, prior to the determining, process 1000 may additionally involve processor 912 arranging one or more TX traffics with respect to an UL-SU transmission. In some implementations, in arranging, process 1000 may involve processor 912 performing one or more of the following: (1) arranging a low MCS traffic and controlling a high TX power at a high TX power limit band to enhance a transmission range; (2) arranging a high MCS traffic and controlling a low TX power at a low TX power limit band to enhance a throughput; (3) arranging the low MCS traffic and controlling a TX duty cycle at the high TX power limit band to enhance the transmission range; (4) arranging the high MCS traffic and controlling the TX duty cycle at the low TX power limit band to enhance the throughput; (5) arranging the low MCS traffic and controlling the TX power and the TX duty cycle at the high TX power limit band to enhance the transmission range; and (6) arranging the high MCS traffic and controlling the TX power and the TX duty cycle at the low TX power limit band to enhance the throughput. Alternatively, in arranging, process 1000 may involve processor 912 performing one or more of the following: (1) arranging a low MCS traffic and controlling a high TX power at a high TA-SAR limit band to enhance a transmission range; (2) arranging a high MCS traffic and controlling a low TX power at a low TA-SAR limit band to enhance a throughput; (3) arranging the low MCS traffic and controlling a TX duty cycle at the high TA-SAR limit band to enhance the transmission range; (4) arranging the high MCS traffic and controlling the TX duty cycle at the low TA-SAR limit band to enhance the throughput; (5) arranging the low MCS traffic and controlling the TX power and the TX duty cycle at the high TA-SAR limit band to enhance the transmission range; and (6) arranging the high MCS traffic and controlling the TX power and the TX duty cycle at the low TA-SAR limit band to enhance the throughput.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
determining a resource allocation regarding one or more multi-link operation, in the following also referred to as MLO, bands (1010); and
allocating at least one of a transmit, in the following also referred to as TX, power, a TX duty cycle and a modulation and coding scheme, in the following also referred to as MCS, rate in wirelessly transmitting in the one or more MLO bands to result in a time averaged specific absorption rate, in the following also referred to as TA-SAR, that is no greater than a predefined limit (1020).

2. An apparatus (910), comprising:
a transceiver (916) configured to communicate wirelessly; and
a processor (912) coupled to the transceiver (916) and configured to perform operations comprising:
determining a resource allocation regarding one or more multi-link operation, in the following also referred to as MLO, bands; and
allocating at least one of a transmit, in the following also referred to as TX, power, a TX duty cycle and a modulation and coding scheme, in the following also referred to as MCS, rate in wirelessly transmitting in the one or more MLO bands to result in a time averaged specific absorption rate, in the following also referred to as TA-SAR, that is no greater than a predefined limit.

3. The method of Claim 1, prior to the determining, further comprising the following steps, or the apparatus (910) of Claim 2, wherein, prior to the determining, the processor (912) is further configured to perform operations comprising:
measuring a TX power limit of each of the one or more MLO bands which is mapped to a respective specific absorption rate, in the following also referred to as SAR, limit; and
receiving one or more messages from one or more stations, in the following also referred to as STAs,
wherein the determining comprises determining based on a result of the measuring and the one or more messages.

4. The method or the apparatus (910) of Claim 3, wherein the one or more messages indicate information comprising at least one of a TA-SAR power limit, a TX target power, a TX MCS rate, one or more TX performance indices, in the following also referred to as TX PER, one or more receive, in the following also referred to as RX, performance indices comprising one or more of a received signal strength index, in the following also referred to as RSSI, a RX performance index, in the following also referred to as RX PER, and a signal-to-noise ratio, in the following also referred to as SNR.

5. The method of Claim 1, 3 or 4, or the apparatus (910) of any one of Claims 2 to 4, wherein the allocating comprises allocating at least one of the TX power, the TX duty cycle and the MCS rate based on a TA-SAR measurement regarding a downlink, in the following also referred to as DL, transmission or an uplink, in the following also referred to as UL, transmission.

6. The method of any one of Claims 1 and 3 to 5, further comprising the following step, or the apparatus (910) of any one of Claims 2 to 5, wherein the processor (912) is further configured to perform operations comprising:
arranging one or more TX traffics with respect to at least one of a downlink single-user, in the following also referred to as DL-SU, transmission, a DL multi-user, in the following also referred to as DL-MU, transmission and an uplink trigger-based, in the following also referred to as UL-TB, transmission.

7. The method or the apparatus (910) of Claim 6, wherein the arranging comprises performing one or more of:
arranging a low MCS traffic and controlling a high TX power at a high TX power limit band to enhance a transmission range;
arranging a high MCS traffic and controlling a low TX power at a low TX power limit band to enhance a throughput;
arranging the low MCS traffic and controlling a TX duty cycle at the high TX power limit band to enhance the transmission range;
arranging the high MCS traffic and controlling the TX duty cycle at the low TX power limit band to enhance the throughput;
arranging the low MCS traffic and controlling the TX power and the TX duty cycle at the high TX power limit band to enhance the transmission range; and
arranging the high MCS traffic and controlling the TX power and the TX duty cycle at the low TX power limit band to enhance the throughput.

8. The method or the apparatus (910) of Claim 6 or 7, wherein the arranging comprises performing one or more of:
arranging a low MCS traffic and controlling a high TX power at a high TA-SAR limit band to enhance a transmission range;
arranging a high MCS traffic and controlling a low TX power at a low TA-SAR limit band to enhance a throughput;
arranging the low MCS traffic and controlling a TX duty cycle at the high TA-SAR limit band to enhance the transmission range;
arranging the high MCS traffic and controlling the TX duty cycle at the low TA-SAR limit band to enhance the throughput;
arranging the low MCS traffic and controlling the TX power and the TX duty cycle at the high TA-SAR limit band to enhance the transmission range; and
arranging the high MCS traffic and controlling the TX power and the TX duty cycle at the low TA-SAR limit band to enhance the throughput.

9. The method of any one of Claims 1 and 3 to 8, further comprising the following step, or the apparatus (910) of any one of Claims 2 to 8, wherein the processor (912) is further configured to perform operations comprising:
arranging one or more TX traffics with respect to an uplink single-user, in the following also referred to as UL-SU, transmission.

10. The method or the apparatus (910) of Claim 9, wherein the arranging comprises performing one or more of:
arranging a low MCS traffic and controlling a high TX power at a high TX power limit band to enhance a transmission range;
arranging a high MCS traffic and controlling a low TX power at a low TX power limit band to enhance a throughput;
arranging the low MCS traffic and controlling a TX duty cycle at the high TX power limit band to enhance the transmission range;
arranging the high MCS traffic and controlling the TX duty cycle at the low TX power limit band to enhance the throughput;
arranging the low MCS traffic and controlling the TX power and the TX duty cycle at the high TX power limit band to enhance the transmission range; and
arranging the high MCS traffic and controlling the TX power and the TX duty cycle at the low TX power limit band to enhance the throughput.

11. The method or the apparatus (910) of Claim 9 or 10, wherein the arranging comprises performing one or more of:
arranging a low MCS traffic and controlling a high TX power at a high TA-SAR limit band to enhance a transmission range;
arranging a high MCS traffic and controlling a low TX power at a low TA-SAR limit band to enhance a throughput;
arranging the low MCS traffic and controlling a TX duty cycle at the high TA-SAR limit band to enhance the transmission range;
arranging the high MCS traffic and controlling the TX duty cycle at the low TA-SAR limit band to enhance the throughput;
arranging the low MCS traffic and controlling the TX power and the TX duty cycle at the high TA-SAR limit band to enhance the transmission range; and
arranging the high MCS traffic and controlling the TX power and the TX duty cycle at the low TA-SAR limit band to enhance the throughput.
